# EUROPEAN PATENT SPECIFICATION

(11) **EP 2 241 794 B1**
(45) Date of publication and mention of the grant of the patent: **09.05.2012**
(21) Application number: 10002743.2
(22) Date of filing: 16.03.2010
(51) Int. Cl.: F16K 31/42

(54) **Discharge valve for an extuingishing system**
Auslassventil für ein Löschsystem
Clapet de refoulement pour système d'extinction

(30) Priority: 17.03.2009 ES 200900517 U
(43) Date of publication of application: 20.10.2010
(73) Proprietor: L.P.G. Técnicas en Extinción de Incendios, S.L., 08950 Espluges de Llobregat Barcelona (ES)
(72) Inventor: Pozo, Alfonso, 08950 Espluges de Llobregat Barcelona (ES); Pérez, Carlos, 08950 Espluges de Llobregat Barcelona (ES)
(74) Representative: Maldonado Jordan, Julia

(56) References cited:
- WO-A1-2006/108931
- WO-A2-2004/079678
- US-A- 3 980 270

## Description

### Object of the Invention

The present invention relates to a discharge valve for an extinguishing system of the type intended for their use in centralized extinguishing systems, allowing the adaptation of the high pressure storage to a low or medium pressure distribution.

### Background of the Invention

The use of centralized installations, in which the extinguishing agent is generally an inert gas, such as argon, nitrogen or carbon dioxide or an active gas, such as halons, is common in the current fire extinguishing systems. Given that the use of halons has certain environmental problems, there is a massive extension of the systems based on an inert gas, and centralized halon gas extinguishing installations are even being reconverted into centralized inert gas extinguishing installations.

These extinguishing installations using inert gas have a certain problem in their operation. The gas is stored in bottles at a high pressure, which can be of up to approximately 300 bars, but the gas distribution pipes are normally sized for a lower pressure, for example of 60 to 80 bars approximately, either because an installation which had previously used halon gas (it works at lower pressure) is being reused, or simply as a matter of costs, since the components of an installation which works at low pressure are cheaper and easier to maintain. Current valves are connected to an activation mechanism, for example a membrane with a striker for the remote operation and once the mentioned valve is open, the bottle or gas source is completely emptied through a metering hole or plate with a small passage, which can act as a pressure regulator, but with a low effective operation. This unsuitable operation of the inert gas exit is due to the fact that at a first moment the supplied pressure is extremely high (originally 300 bars) and the metering hole is oversaturated in its sizing. As the inert gas is vented, the pressure decreases considerably, therefore the gas flow rate also decreases undesirably over time, since the ideal situation would be that the flow rate is constant during a predetermined time period for the venting of the inert gas in the room or enclosure which is to be protected.

PCT application WO2004079678 for a "SELF-MODULATING INERT GAS FIRE SUPPRESSION SYSTEM" of Fike Corporation is known, which describes a system with a discharge valve coupled to inert gas bottles and which are operable to release the gas from the cylinders at a more or less constant pressure (approximately of 10 to 100 bars), throughout a substantial time period.

The valve is formed by a body with a high pressure inlet port which can be coupled to a high pressure extinguishing gas source and a low or medium pressure outlet port to distribution means for distributing said gas. Between both ports there is a passage of gas and a plug of said passage, said plug being movable by a piston type shiftable actuator between two positions for closing, opening and regulating the gas outlet. The body comprises a first chamber communicated with an effective surface of pressure on the shiftable actuator, and operatively suitable for causing the shifting of the plug in an opening movement, and a second chamber communicated with an effective surface of pressure on the shiftable actuator, this second chamber being opposite the first chamber and operatively suitable for shifting said plug in a closing movement. The valve comprises an assembly guided by a spring of the shiftable actuator to the closing and opening positions of the passage of gas. During the operation of the valve the shiftable actuator is counterbalanced by the pressure of the gas in the two chambers. The valve is operated by drainage of the gas from one of the chambers allowing the gas to flow from the cylinder. As the gas is discharged, it flows inside and outside the chambers to achieve the desired constant low or medium pressure exit. This system has the problem that in a rest position the entire valve is subjected to high pressure, including the two chambers, which forces an oversized and more expensive construction. Furthermore the pressure regulation depends on the passage of gas through both chambers in a cascade, which involves said regulation being pulsating.

### Description of the Invention

The discharge valve for an extinguishing system, object of this invention, has technical particularities intended to allow a more regulated operation, enabling the use of more cost-effective medium and low pressure distributors and channels.

Thus, the valve comprises: - a first conduit with passageways, arranged between a point of the body of the valve subjected to high pressure and a first chamber, there being in said first conduit a blocking means operable from the exterior, - a second conduit for continuous communication between the second chamber and the low and medium pressure outlet port. Both chambers applied in an opposite manner on the shiftable actuator allow said first conduit to be suitable in an inoperative condition for enabling the closing of the valve by the effect of the spring and the low pressure in the effective surface of pressure in the first chamber and in an operative condition for the opening of the plug in the passage of gas by the increase of pressure on the effective surface of pressure in the first chamber, the regulation of the position of the plug by the pressure in the effective surface of pressure of the shiftable actuator of the second chamber and the effect of the mentioned spring being enabled.

This allows fundamental advantages consisting first of the fact that the mobile parts are not subjected to any pressure in the rest state, the gas at high pressure being blocked in the plug and in the blocking means, which allows the simpler and more cost-effective construction thereof. A second advantage consists of the fact that the regulation of the pressure is performed by differences of pressure between both chambers and the loading of the spring, whereby the flow of inert gas only occurs through the passage between the high pressure inlet port and the low or medium pressure outlet port, in a direct manner.

It has been provided that the blocking means of the first conduit are formed by a perforable membrane and striker means for causing its rupture from a remote device, such as an electric trigger or any other trigger, enabling the passage of gas at high pressure to the first chamber in an operative position of the valve. The perforable membrane and the striker means are arranged on a threaded seat of the body of the valve, which affects the passage of the first conduit, which allows the use of a standardized striker.

In an embodiment, a check valve has been provided in the conduit of the one-way flow pressure circuit between a high pressure point and the first chamber, and a pressure venting conduit of said first chamber through an equalizing valve loaded with a spring for fixing the overpressure has been provided in said first chamber.

Thus, the check valve assures that the chamber always has a minimum overpressure once the mechanism is triggered. At this moment, the pressure can reach up to 300 bars, although the operation concept is applicable to any pressure, which is the storage pressure which the inert gas storage tanks and bottles commonly have. However, it is necessary that said high pressure in the first chamber is not constant and equal to the maximum value achieved in the triggering, but rather that it is reduced and adapted as the pressure inside the gas tanks or bottles decreases. The equalizing valve complies with this mission by releasing pressure from the first chamber and always maintaining in said first chamber a more or less constant overpressure or differential pressure, whereby the operation of the valve by the action on the actuator is assured.

According to the loading in the spring of this equalizing valve and to where the pressure is vented a more or less progressive and controlled discharge effect is obtained.

Thus, in a first embodiment, the venting conduit is connected to a point of the inlet passageway to the first chamber, before the check valve, whereby the excess of pressure returns to the entrance in said passageway. The equalizing valve assures that the difference of pressure at which it is adjusted is constant between the first chamber and said passageway, or better said the pressure in the inlet port.

In a second embodiment, the venting conduit is arranged between the first chamber and an intermediate chamber existing between the first chamber and the second chamber. In this situation said intermediate chamber acts on the plunger of the actuator by means of difference of effective surfaces with the second chamber.

In a third embodiment alternative, the venting conduit simply faces the exterior of the valve, the difference of pressure occurring simply by the loading of the spring with reference to the ambient pressure.

The first conduit is associated with a safety device against overpressure connected at a high pressure point prior to the blocking means, which prevents the bottle from being able to be subjected to overpressure.

The shiftable actuator is arranged in a longitudinal housing of the body for its shifting, the first chamber and the second chamber being defined in said housing.

In turn, the spring is a coil spring or another equivalent element housed on the shiftable actuator. This spring is housed inside the second chamber whereby the first chamber is compensated during the operation of the valve by means of the internal pressure of the second chamber and the force of the spring, as has been mentioned.

In order to facilitate the assembly of the entire set, the body comprises an upper lid of access to the housing of the shiftable actuator; this lid forms the rear part of the first chamber.

The shiftable actuator is laterally fixed in said housing by a closing collar screwed on the body of the valve, separating in a tight manner the first chamber from an intermediate chamber. This collar has an O-ring gasket for tightness of the first upper chamber.

The intermediate chamber limits the possible longitudinal movement of the shiftable actuator, and therefore of the plug in the opening and closing of the valve. This chamber is communicated with the exterior of the body of the valve by means of a ventilation passageway.

The plug is arranged in a closing position before a seat configured in the passage of the extinguishing gas, suitable for said plug to be shifted towards the high pressure area defined between the high pressure port and said seat in an operative position. Thus, a clear advantage is achieved, consisting of the closing of the plug occurring directly by the high pressure of the gas of the bottle thereon.

In a preferred embodiment, the plug is formed by a receptacle coupled on an end of the shiftable actuator, for example by screwing, and having a closing gasket and a rear ring with a variable section for adjusting the passage section of the gas with the seat of the passage. Thus, according to the shifting of the plug the width of the passage of gas is variable, a more progressive and dynamically effective regulation of the pressure drop produced being obtained.

The seat of the passage area has a projecting flange for sealing against the gasket of the plug, which allows a good tightness of the valve in its closed position.

### Description of the Drawings

To complement the description which is being made and for the purpose of facilitating the understanding of the features of the invention, a set of drawings is attached to the present specification, in which the following has been depicted with an illustrative and non-limiting character:

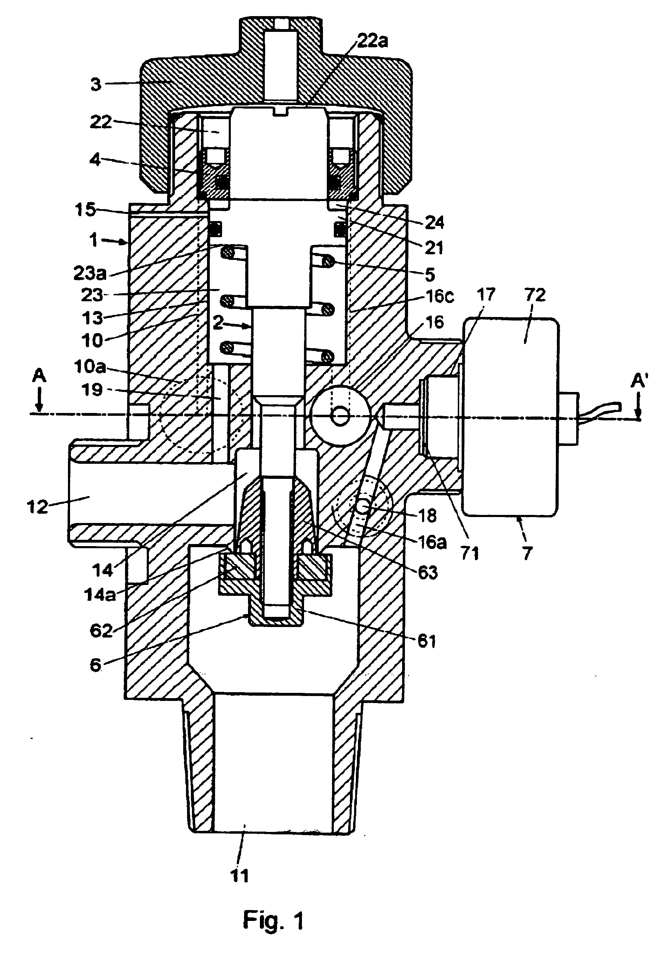

Figure 1 shows a longitudinal section of the valve in a closed position.

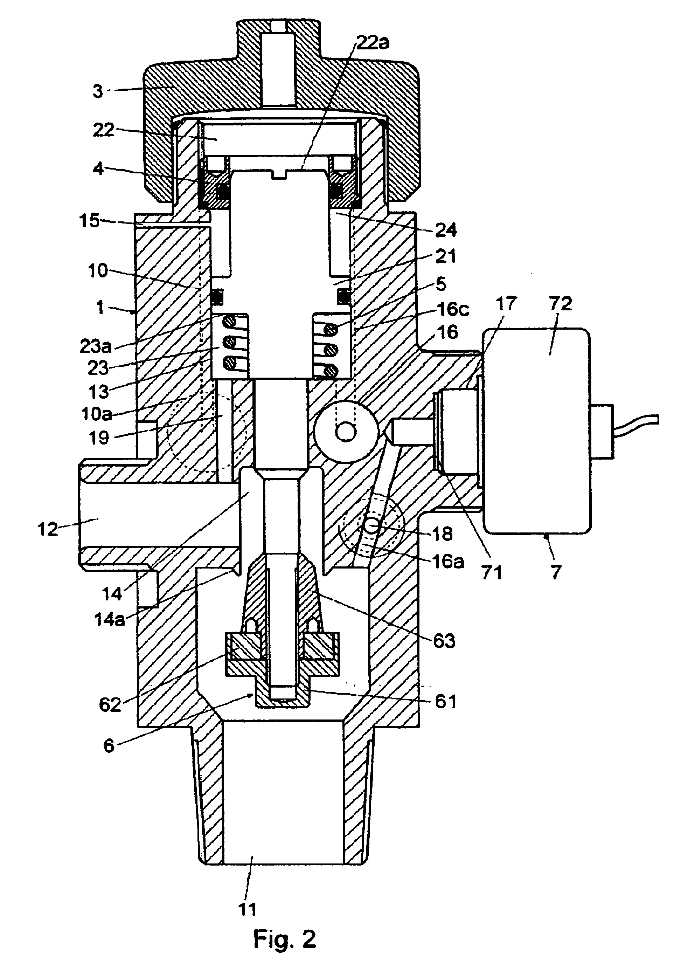

Figure 2 shows a longitudinal section of the valve in an open position.

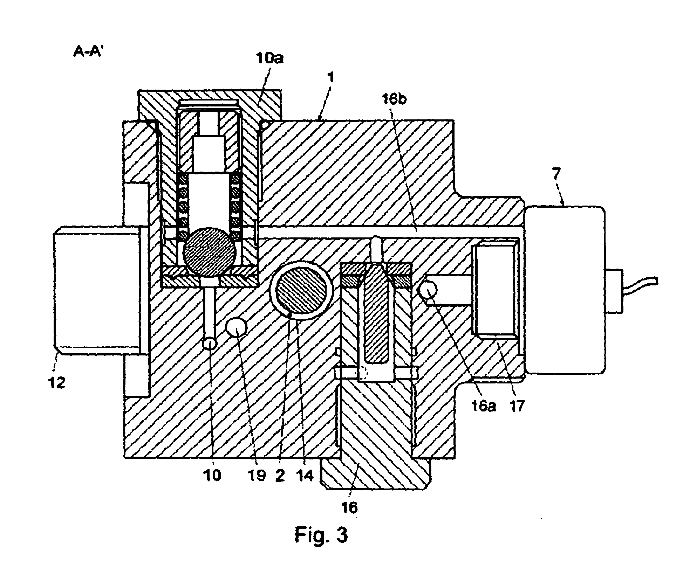

Figure 3 shows a cross section A-A' of the body of the valve.

### Preferred Embodiment of the invention

As can be observed in the mentioned figures the valve is formed by a tubular body (1) which has at one end a high pressure gas inlet port (11) connectable to a storage bottle (not depicted) and on one side a medium or low pressure gas outlet port (12), connected to distribution means (not depicted) for distributing said gas to the expelling points. Inside said body (1) there is a longitudinal housing (13) in which a shiftable actuator (2) is assembled. Said housing (13) is open at one end, in which there is a lid (3), and at the opposite end it has an access of the shiftable actuator (2) towards a passage (14) of gas which communicates the inlet port (11) and the outlet port (12).

The shiftable element (2) has in its middle part an expanded collar or plunger (21) with a gasket for tightness with the side wall and is blocked at the upper part by a closing collar (4), also with a gasket for tightness with respect to the contour of said shiftable actuator (2). Thus, the housing is divided into a first chamber (22) defined between the lid (3) and the assembly of the closing collar (4) and the effective surface (22a) of the end of the shiftable actuator (2), a second chamber (23) defined between the effective surface (23a), the plunger (21) of the shiftable actuator (2) and the bottom of the housing (13) and an intermediate chamber (24) defined between the mentioned plunger (21) and the closing collar (4), this intermediate chamber (24) being communicated with the exterior through a ventilation passageway (15). Inside the second chamber (23) there is a spring (5), coil spring or compression element, coaxially arranged on the shiftable actuator (2) and supported against the inner effective surface (23a) of the plunger (21).

The shiftable actuator (2) has at its end close to the inlet port (11) a plug (6), configured in front of the passage (14) of gas between both ports (11 and 12) and which can be coupled on a projecting seat (14a) of said passage (14). The plug (6) allows the opening of the passage (14) when the shiftable actuator (2) moves towards the inlet port (11), and the closing of the passage (14) when said shiftable actuator (2) moves in the opposite direction. This plug (6) is formed by a receptacle (61) coupled to the end of the shiftable actuator (2), there being a closing gasket (62) in its inner part for its coupling on the seat (14a) and a rear ring (63), this rear ring (63) having a variable section to define a passage which can be regulated with the seat (14a) in the event of opening of the valve.

The body (1) of the valve has a first conduit defined by three passageways (16a, 16b and 16c), the first passageway (16a) being arranged between a high pressure point close to the gas inlet port (11) and an outer threaded seat (17). The second passageway (16b) is arranged between the threaded seat (17) and a check valve (16) for the passage of the pressurized fluid. The third passageway (16c) is between the check valve (16) and the first chamber (22). In said threaded seat (17) there are blocking means (7) defined by a standard trigger, with a perforable membrane (71) and striker means (72) which can be remotely operated, the rupture of the perforable membrane (71) enabling the passage of the gas at high pressure to the first chamber (22) and the opening of the valve.

In the passageway (16a) of the first conduit there is an outlet (18) to a safety device (8) against overpressure to prevent an excess of pressure in the gas bottle.

In the embodiment depicted in the figures, the chamber (22) is connected by means of a venting conduit (10) to the second passageway (16b) through an equalizing valve (10a), this equalizing valve (10a) being loaded with a spring to create a certain overpressure in the first chamber (22) with respect to the pressure in said second passageway (16b). This venting conduit (10) is an extension of the air transmission leading the third conduit (16c) to the equalizing valve (10a).

The body (1) of the valve has a second direct conduit (19) between the second chamber (23) and the low or medium pressure outlet port (12), which enables, in an operative position of the valve, that in said second chamber (23) there is a pressure approximately equal to the low or medium exit pressure, whereby there is a regulating negative pressure on the shiftable actuator.

Having sufficiently described the nature of the invention as well as a preferred embodiment, it is stated for the relevant purposes that the materials, shape, size and arrangement of the described elements can be modified provided that this does not involve an alteration of the essential features of the invention which are claimed below.

## Claims

1. A discharge valve for an extinguishing system, more specifically a valve formed by a body (1), with a high pressure inlet port (11) which can be coupled to a high pressure extinguishing gas source and a low or medium pressure outlet port (12), to distribution means for distributing said gas, a passage (14) of gas and a plug (6) of said passage (14) being located between both ports (11 and 12), said plug (6) being shiftable by a shiftable actuator (2) between two positions for closing, opening and regulating the gas outlet, the body (1) comprising a first chamber (22) communicated with an effective surface (22a) of pressure on the shiftable actuator (2), and operably suitable for causing the shifting of the plug (6) in an opening movement, a second chamber (23) communicated with an effective surface (23a) of pressure on the shiftable actuator (2), this second chamber (23) being opposite the first chamber (22) and operably suitable for shifting said plug (6) in a closure movement, and optionally a spring (5) for shifting the shiftable actuator (2) towards the closing position of the passage (14) of gas by the plug (6), **characterized in that** it comprises: - a first conduit with passageways (16a, 16b, 16c), arranged between a point of the body (1) of the valve subjected to high pressure and the first chamber (22), there being in said first conduit a blocking means (7) operable from the exterior, - a second conduit (19) for continuous communication between the second chamber (23) and the low and medium pressure outlet port (12); said first conduit being suitable in an inoperative condition for the closing of the plug (6) by the optional effect of the spring (5) and the low pressure in the effective surface (22a) of pressure in the first chamber (22), and in an operative condition for the opening of the plug (6) in the passage of gas by the increase of pressure on the effective surface (22a) of pressure in the first chamber (22), the regulation of the position of the plug (6) being enabled by the pressure in the effective surface (23a) of pressure of the shiftable actuator (2) of the second chamber (23) and the optional effect of the mentioned spring (5), and **in that** it comprises a check valve (16) in the passageways (16a, 16b, 16c) of the first conduit of the one-way flow pressure circuit between a high pressure point and the chamber (22), and a pressure venting conduit (10) of said chamber (22) through an equalizing valve (10a) loaded with a spring for fixing the controlled overpressure in said chamber (22), and **in that** the plug (6) is arranged in a closing position before a seat (14a) configured in the passage (14) of the gas, suitable for said plug (6) to be shifted towards the high pressure area defined between the high pressure port and said seat (14a) in an operative position.

2. The valve according to claim 1, **characterized in that** the blocking means (7) of the first conduit are formed by a perforable membrane (71) and striker means (72) for causing its rupture from a remote device, enabling the passage of gas at high pressure to the first chamber (22) in an operative position of the valve.

3. The valve according to claim 2, **characterized in that** the perforable membrane (71) and the striker means (72) are arranged on a threaded seat (17) of the body (1) of the valve.

4. The valve according to claim 1, **characterized in that** the first conduit is associated with a safety device (8) against overpressure (8) connected at a high pressure point prior to the blocking means (7).

5. The valve according to claim 1, **characterized in that** the shiftable actuator (2) is arranged in a longitudinal housing (13) of the body (1) for its shifting, the first chamber (22) and the second chamber (23) being defined in said housing (13).

6. The valve according to claim 1, **characterized in that** the spring (5) is a coil spring housed on the shiftable actuator (2).

7. The valve according to claim 6, **characterized in that** the spring is housed inside the second chamber (23).

8. The valve according to claim 6, **characterized in that** the body (1) comprises an upper lid (3) of access to the housing of the shiftable actuator (2).

9. The valve according to claim 5, **characterized in that** the shiftable actuator (2) is laterally fixed by a closing collar (4) screwed on the body (1) of the valve, separating in a tight manner the first chamber (22) from an intermediate chamber (24).

10. The valve according to claim 9, **characterized in that** the intermediate chamber (24) is communicated with the exterior of the body (1) of the valve by means of a ventilation passageway (15).

11. The valve according to claim 1, **characterized in that** the plug (6) is formed by a receptacle (61) coupled on an end of the shiftable actuator (2) and having a closing gasket (62) and a rear ring (63) with a variable section to adjust the circulation section of the gas with the seat (14a) of the passage (14).

12. The valve according to claim 11, **characterized in that** the seat (14a) of the passage area (14) has a projecting flange for sealing against the closing gasket (62) of the plug (6).

## Patentansprüche

1. Auslassventil für eine Löschanlage, besonders ein Ventil, welches aus einem Körper (1), mit einer Hochdruck-Eintrittsöffnung (11), welche mit einer Hochdruck-Löschgasquelle gekoppelt werden kann und einer Nieder- oder Mitteldruck-Austrittsöffnung (12), welche mit Verteilungsmitteln für die Verteilung des genannten Gases gekoppelt werden kann, gebildet ist, wobei sich ein Gasdurchgang (14) und ein Stopper (6) des genannten Durchgangs (14) zwischen beiden Öffnungen (11 und 12) befinden, wobei der genannte Stopper (6) durch einen verstellbaren Aktuator (2) zwischen zwei Stellungen zum Schließen, Öffnen und Regulieren des Gasausgangs verstellbar ist, wobei der Körper (1) Folgendes umfasst: eine erste Kammer (22), welche mit einer effektiven Druckfläche (22a) auf dem verstellbaren Aktuator (2) in Verbindung steht, und betriebsmäßig geeignet ist, um die Verstellung des Stoppers (6) mit einer Öffnungsbewegung zu bewirken, eine zweite Kammer (23), welche mit einer effektiven Druckfläche (23a) auf dem verstellbaren Aktuator (2) in Verbindung steht, wobei diese zweite Kammer (23) der ersten Kammer (22) gegenübersteht und betriebsmäßig geeignet ist, um den genannten Stopper (6) mit einer Schließbewegung zu verstellen, und gegebenenfalls eine Feder (5), um den verstellbaren Aktuator (2) in Richtung der Schließstellung des Gasdurchgangs (14) durch den Stopper (6) zu verstellen, **dadurch gekennzeichnet, dass** es Folgendes umfasst: - eine erste Leitung mit Passagen (16a, 16b, 16c), welche zwischen einem Punkt des Körpers (1) des Ventils, welcher einem Hochdruck ausgesetzt ist, und der ersten Kammer (22) angeordnet ist, wobei es in der genannten ersten Leitung von Außen bedienbare Blockierungsmittel (7) gibt, - eine zweite Leitung (19) zur durchgängigen Verbindung zwischen der zweiten Kammer (23) und der Nieder- und Mitteldruck-Austrittsöffnung (12); wobei die genannte erste Leitung in einer nicht betriebsbereiten Bedingung für das Schließen des Stoppers (6) durch die optionale Wirkung der Feder (5) und den Niederdruck auf der effektiven Druckfläche (22a) in der ersten Kammer (22) geeignet ist, und in einer Betriebsbedingung für das Öffnen des Stoppers (6) in dem Gasdurchgang durch die Druckerhöhung auf der effektiven Druckfläche (22a) in der ersten Kammer (22), wobei die Regulierung der Stellung des Stoppers (6) durch den Druck auf der effektiven Druckfläche (23a) des verstellbaren Aktuators (2) der zweiten Kammer (23) und die optionale Wirkung der genannten Feder (5) ermöglicht wird, und dass es ein Rückschlagventil (16) in den Passagen (16a, 16b, 16c) der ersten Leitung des unidirektionalen Strömungsdruckkreislaufs zwischen einem Hochdruckpunkt und der Kammer (22), und eine Druckabführungsleitung (10) der genannten Kammer (22) durch ein mit einem federbelasteten Ausgleichsventil (10a) zur Festlegung des gesteuerten Überdrucks in der genannten Kammer (22) umfasst, und dass der Stopper (6) in einer Schließstellung vor einem im Gasdurchgang (14) ausgebildeten Sitz (14a) angeordnet ist, wobei der genannte Stopper (6) dazu geeignet ist, in einer Betriebsposition zur zwischen der Hochdrucköffnung und dem genannten Sitz (14a) definierten Hochdruckfläche verstellt zu werden.

2. Ventil nach Anspruch 1, **dadurch gekennzeichnet, dass** die Blockierungsmittel (7) der ersten Leitung aus einer perforierbaren Membran (71) und Schlagmitteln (72), um diese von einer Femvorrichtung aus durchzubrechen, gebildet sind, wobei der Durchgang eines Hochdruckgases zur ersten Kammer (22) in einer Betriebsstellung des Ventils ermöglicht wird.

3. Ventil nach Anspruch 2, **dadurch gekennzeichnet, dass** die perforierbare Membran (71) und die Schlagmittel (72) auf einem Gewindesitz (17) des Körpers (1) des Ventils angeordnet sind.

4. Ventil nach Anspruch 1, **dadurch gekennzeichnet, dass** die erste Leitung einer Sicherheitsvorrichtung (8) gegen Überdruck (8), welche bei einem Hochdruckpunkt vor den Blockierungsmitteln (7) verbunden ist, zugeordnet ist.

5. Ventil nach Anspruch 1, **dadurch gekennzeichnet, dass** der verstellbare Aktuator (2) in einem länglichen Gehäuse (13) des Körpers (1) für dessen Verstellung angeordnet ist, wobei die erste Kammer (22) und die zweite Kammer (23) in dem genannten Gehäuse (13) definiert sind.

6. Ventil nach Anspruch 1, **dadurch gekennzeichnet, dass** die Feder (5) eine auf dem verstellbaren Aktuator (2) gelagerte Schraubenfeder ist.

7. Ventil nach Anspruch 6, **dadurch gekennzeichnet, dass** die Feder im Inneren der zweiten Kammer (23) gelagert ist.

8. Ventil nach Anspruch 6, **dadurch gekennzeichnet, dass** der Körper (1) einen oberen Deckel (3) für den Zugang zu dem Gehäuse des verstellbaren Aktuators (2) umfasst.

9. Ventil nach Anspruch 5, **dadurch gekennzeichnet, dass** der verstellbare Aktuator (2) seitlich durch einen auf dem Körper (1) des Ventils geschraubten Schließring (4) befestigt ist, wobei die erste Kammer (22) von einer Zwischenkammer (24) dichtend getrennt wird.

10. Ventil nach Anspruch 9, **dadurch gekennzeichnet, dass** die Zwischenkammer (24) mit dem Äußeren des Körpers (1) des Ventils mittels einer Lüftungspassage (15) in Verbindung steht.

11. Ventil nach Anspruch 1, **dadurch gekennzeichnet, dass** der Stopper (6) aus einem auf einem Ende des verstellbaren Aktuators (2) gekoppelten Gefäß (61) gebildet ist und welcher eine Schließfuge (62) und einen hinteren Ring (63) mit variablem Querschnitt aufweist, um den Strömungsabschnitt des Gases auf den Sitz (14a) des Durchgangs (14) einzustellen.

12. Ventil nach Anspruch 11, **dadurch gekennzeichnet, dass** der Sitz (14a) der Durchgangsfläche (14) einen vorspringenden Flansch für die Versiegelung gegen die Schließfuge (62) des Stoppers (6) aufweist.

## Revendications

1. Soupape de décharge pour un système d'extinction, plus précisément une soupape formée d'un corps (1), ), avec un orifice (11) d'entrée à haute pression qui peut se coupler à une source de gaz d'extinction à haute pression et un orifice (12) de sortie à basse ou moyenne pression, vers des moyens de distribution pour distribuer ledit gaz, un passage (14) de gaz et un bouchon (6) pour ledit passage (14) étant situés entre les deux orifices (11 et 12), ledit bouchon (6) pouvant se déplacer au moyen d'un actionneur déplaçable (2) entre deux positions pour fermer, ouvrir et régler la sortie de gaz, le corps (1) comprenant une première chambre (22) communiquée avec une surface effective (22a) de pression sur l'actionneur déplaçable (2), et opérationnellement appropriée pour causer le déplacement du bouchon (6) lors d'un mouvement d'ouverture, une deuxième chambre (23) communiquée avec une surface effective (23a) de pression sur l'actionneur déplaçable (2), cette deuxième chambre (23) étant opposée à la première chambre (22) et opérationnellement appropriée pour déplacer ledit bouchon (6) lors d'un mouvement de fermeture, et optionnellement un ressort (5) pour déplacer l'actionneur déplaçable (2) vers la position de fermeture du passage (14) de gaz par le bouchon (6), **caractérisée en ce qu'**elle comprend: -une première conduite avec des voies (16a, 16b, 16c), disposée entre un point du corps (1) de la soupape soumis à haute pression et la première chambre (22), dans ladite première conduite se trouvant un moyen de verrouillage (7) actionnable de l'extérieur, - une deuxième conduite (19) pour la communication continue entre la deuxième chambre (23) et l'orifice (12) de sortie à basse et moyenne pression; ladite première conduite étant appropriée dans une condition non opérationnelle pour la fermeture du bouchon (6) par l'effet optionnel du ressort (5) et la basse pression sur la surface effective (22a) de pression dans la première chambre (22), et dans une condition opérationnelle pour l'ouverture du bouchon (6) dans le passage de gaz par l'augmentation de pression sur la surface effective (22a) de pression dans la première chambre (22), le réglage de la position du bouchon (6) étant permise par la pression sur la surface effective (23a) de la pression de l'actionneur déplaçable (2) de la deuxième chambre (23) et l'effet optionnel dudit ressort (5); et **en ce qu'**elle comprend une soupape antiretour (16) dans les voies (16a, 16b, 16c) de la première conduite du circuit de pression de flux unidirectionnel entre un point à haute pression et la chambre (22), et une conduite de purge de pression (10) de ladite chambre (22) par une soupape d'égalisation (10a) chargée au moyen d'un ressort pour fixer la surpression contrôlée dans ladite chambre (22), et **en ce que** le bouchon (6) est disposé dans une position de fermeture avant un siège (14a) configuré dans le passage (14) du gaz, approprié pour que ledit bouchon (6) soit déplacé vers la zone à haute pression définie entre l'orifice à haute pression et ledit siège (14a) dans une position opérationnelle.

2. Soupape selon la revendication 1, **caractérisée en ce que** les moyens de verrouillage (7) de la première conduite sont formés d'une membrane perforable (71) et un moyen percuteur (72) pour causer sa rupture à partir d'un dispositif distant, en permettant le passage de gaz à haute pression à la première chambre (22) dans une position opérationnelle de la soupape.

3. Soupape selon la revendication 2, **caractérisée en ce que** la membrane perforable (71) et le moyen percuteur (72) sont disposés sur un siège fileté (17) du corps (1) de la soupape.

4. Soupape selon la revendication 1, **caractérisé en ce que** la première conduite est associée à un dispositif de sécurité (8) contre la surpression (8) connecté à un point à haute pression avant les moyens de verrouillage (7).

5. Soupape selon la revendication 1, **caractérisée en ce que** l'actionneur déplaçable (2) est disposé dans un logement longitudinal (13) du corps (1) pour son déplacement, la première chambre (22) et la deuxième chambre (23) étant définies dans ledit logement (13).

6. Soupape selon la revendication 1, **caractérisée en ce que** le ressort (5) est un ressort hélicoïdal logé sur l'actionneur déplaçable (2).

7. Soupape selon la revendication 6, **caractérisée en ce que** le ressort est logé à l'intérieur de la deuxième chambre (23).

8. Soupape selon la revendication 6, **caractérisée en ce que** le corps (1) comprend un couvercle supérieur (3) d'accès au logement de l'actionneur déplaçable (2).

9. Soupape selon la revendication 5, **caractérisée en ce que** l'actionneur déplaçable (2) est fixé latéralement par un collier de fermeture (4) vissé sur le corps (1) de la soupape, en séparant d'une manière étanche la première chambre (22) d'une chambre intermédiaire (24).

10. Soupape selon la revendication 9, **caractérisée en ce que** la chambre intermédiaire (24) est communiquée avec l'extérieur du corps (1) de la soupape au moyen d'une voie de ventilation (15).

11. Soupape selon la revendication 1, **caractérisée en ce que** le bouchon (6) est formé par un réceptacle (61) couplé à une extrémité de l'actionneur déplaçable (2) et ayant un joint de fermeture (62) et une bague arrière (63) avec une section variable pour ajuster la section d'écoulement du gaz avec le siège (14a) du passage (14).

12. Soupape selon la revendication 11, **caractérisée en ce que** le siège (14a) de la zone de passage (14) possède un rebord d'étanchéification en saillie disposé contre le joint de fermeture (62) du bouchon (6).
